(19) **Europäisches Patentamt / European Patent Office / Office européen des brevets**

(11) **EP 1 736 748 B1**

(12) **EUROPÄISCHE PATENTSCHRIFT**

(45) Veröffentlichungstag und Bekanntmachung des Hinweises auf die Patenterteilung:
**02.05.2012 Patentblatt 2012/18**

(51) Int Cl.:
*G01G 23/10* (2006.01)   *G01G 3/14* (2006.01)

(21) Anmeldenummer: **05105424.5**

(22) Anmeldetag: **21.06.2005**

(54) **Verfahren zur Verarbeitung des Ausgangssignals eines Messumformers sowie eine Kraftmessvorrichtung zur Durchführung des Verfahrens.**

Method of processing the output signal of a mesuring transducer and force measuring device for carrying out the method.

Procédé de traitement du signal de sortie d'un capteur de mesure et dispositif de mesure de force servant à la mise en oeuvre de ce procédé.

(84) Benannte Vertragsstaaten:
**AT BE BG CH CY CZ DE DK EE ES FI FR GB GR HU IE IS IT LI LT LU MC NL PL PT RO SE SI SK TR**

(72) Erfinder: **Reber, Daniel**
**8322, Madetswil (CH)**

(43) Veröffentlichungstag der Anmeldung:
**27.12.2006 Patentblatt 2006/52**

(73) Patentinhaber: **Mettler-Toledo AG**
**8606 Greifensee (CH)**

(56) Entgegenhaltungen:
EP-A- 0 757 429   WO-A-03/015269
US-A- 4 705 126   US-A- 5 190 115
US-A- 5 337 264   US-A- 5 548 543
US-A- 5 665 941   US-A1- 2004 088 342
US-A1- 2005 023 046   US-B1- 6 271 484

**EP 1 736 748 B1**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft ein Verfahren zur Verarbeitung des Ausgangssignals eines Messumformers sowie eine nach diesem Verfahren arbeitende, mit einem solchen Messumformer versehene Kraftmessvorrichtung, insbesondere eine Waage, nach dem Oberbegriff des Patentanspruchs 1 bzw. 9.

Die Messgenauigkeit einer Kraftmessvorrichtung, beispielsweise einer Waage mit elektromagnetischer Kraftkompensation oder DMS-Technologie (siehe [1], Bauen Sie Ihre Qualität auf solidem Grund!, Firmenbrochure, Mettler Toldeo GmbH, Januar 2001, Seiten 14 - 15) wird durch zahlreiche Einflussfaktoren bestimmt, die in [2], Wägefibel, Mettler Toldeo GmbH, April 2001 beschrieben sind. Besonders störend sind mechanische Einwirkungen, wie Vibrationen oder Stösse, weshalb bereits in Waagen mit analoger Signalverarbeitung Filter vorgesehen wurden, die der Beseitigung von störenden Signalanteilen dienten.

Aus [3], CH 673 529 A5 ist eine Waage mit einem aktiven Tiefpass-Filter bekannt, das zur Unterdrückung von Störsignalen vorgesehen ist, die in Form von Störwechselströmen dem von der Wägezelle abgegebenen und über eine Signalleitung einem AnalogDigital-Wandler zugeführten Gleichstrom überlagert sind. Die Störsignale werden am Signalausgang der Wägezelle aus der Signalleitung ausgekoppelt, durch einen Inverter in ihrer Phase um 180° gedreht und am Signaleingang des Analog-DigitalWandlers wieder in die Signalleitung eingekoppelt, wobei zwischen dem Auskopplungsknoten und dem Einkopplungsknoten ein ohmscher Widerstand in die Signalleitung eingeschaltet ist. Die Störsignale werden daher durch entsprechende, gegenphasige Signalanteile ausgelöscht.

In [4], DE 10024986 A1 ist ein elektronischer Wägeaufnehmer mit einer digitalen Signalverarbeitungseinheit beschrieben, bei der mit Hilfe eines eine Tiefpasscharakteristik aufweisenden Filters aus dem Ausgangssignal des Wägeaufnehmers der Gleichanteil ermittelt und daraus das Wägeergebnis abgeleitet wird. Dabei wird ein erschütterungsabhängiges Signal ermittelt und in Abhängigkeit dessen der Gleichanteil des Messsignals verändert.

Gemäss [4] werden dadurch Nachteile vermieden, die bei der aus [5], US 5,665,941 bekannten Lösung auftreten. Gemäss [5] wird bei einer Differenzialdosierwaage in Abhängigkeit vom Störsignal die Zeitkonstante des Tiefpassfilters verändert. Dabei wird bei großen Störungen die Zeitkonstante des Tiefpassfilters verlängert, um eine stärkere Filterwirkung zu erzielen. Dies macht gemäss [4] die Reaktion des Wägeaufnehmers auf Wechsel jedoch langsam und erhöht die Reproduzierbarkeit der Messungen nur unwesentlich. Sofern die Zeitkonstante zu gross gewählt ist, resultiert zudem eine hohe Einschwingzeit beim Auftreten von Lastwechseln.

Aus [6], US 2004/0088342 A1 und [7], US 6,271,484 B1 sind weitere Verfahren und zur Anwendung dieser Verfahren geeignete Waagen beschrieben, bei denen vom Messumformer abgegebene Signale mittels variabler digitaler Filter bearbeitet werden.

Das in [6] beschriebene Verfahren erlaubt die individuelle Anpassung der Charakteristik des verwendeten Filters an die Schwingungseigenschaften des kontrollierten Messsystems. Die Dämpfung des Filters kann daher in einem ausgewählten Frequenzbereich beliebig erhöht werden.

Gemäss dem in [7] beschriebenen Verfahren wird geprüft, ob die Amplitude der durch Vibrationen verursachten Störsignale in einem zulässigen Bereich liegt. Sofern dies nicht der Fall ist, wird die Filter-Charakteristik verändert, bis die Störsignale wieder innerhalb des zulässigen Bereichs liegen.

Insbesondere das zuletzt beschriebene Verfahren erfordert eine hohe Rechenleistung und erlaubt aufgrund der Zeitkonstante des Regelkreises kaum eine genügend schnelle Anpassung an rasch auftretende Änderungen der Amplituden auftretender Vibrationen und Schwingungen.

Aus [9] US 5,190,115 und [10] US 4,705,126 sind Verfahren zur Verkürzung der Einschwingzeit des Signalfilters bei einem Lastwechsel bekannt, bei welchen das Signalfilter kurzfristig überbrückt oder die Abtastfrequenz des Filters kurzfristig erhöht wird. Allerdings entstehen durch diese zumindest implizit offenbarten Schaltvorgänge zusätzliche Störungen in den Messsignalen, sodass diese Verfahren bei hohen Genauigkeitsanforderungen weniger geeignet sind.

Die bei Lastwechseln auftretenden, in ihrer Amplitude schnell ändernden Schwingungen werden mit den bestehenden, zum Teil sehr aufwendigen Lösungen jedoch nur ungenügend korrigiert, falls gleichzeitig eine kurze Einschwingzeit der Waage nach einer erfolgten Laständerung realisiert werden soll. Da bei den bisher angewendeten Lösungen meist ein Kompromiss angestrebt wurde, zwischen höchster Dämpfung störender Schwingungen und längster Ansprechzeit einerseits sowie geringster Dämpfung störender Schwingungen und kürzester Ansprechzeit andererseits, wurden sowohl hinsichtlich der Ansprechzeit, als auch hinsichtlich der Filterung störender Signalanteile bisher noch keine Resultate erzielt, die höchsten Ansprüchen genügen.

Der vorliegenden Erfindung liegt daher die Aufgabe zugrunde, ein verbessertes Verfahren zur Verarbeitung des Ausgangssignals eines Messumformers sowie eine nach dem erfindungsgemässen Verfahren arbeitende Kraftmessvorrichtung zu schaffen.

Insbesondere soll ein Verfahren angegeben werden, welches erlaubt, mit einfachen Massnahmen eine optimale Filterung des Ausgangssignals des Messumformers und gleichzeitig eine minimale Einschwingzeit der Kraftmessvorrichtung zu erzielen.

Ferner soll das Verfahren erlauben, die Filterparameter des oder der verwendeten Filter hinsichtlich der bei Laständerungen auftretenden Einschwingvorgänge sowie hinsichtlich der ausserhalb der Laständerungen auftretenden Signalstörungen zu optimieren.

Die erfindungsgemässe Kraftmessvorrichtung soll zudem einfacher aufgebaut und einfacher einstellbar sein.

Diese Aufgabe wird mit einem Verfahren und einer Kraftmessvorrichtung gelöst, welche die in Anspruch 1 und Anspruch 9 angegebenen Merkmale aufweisen. Vorteilhafte Ausgestaltungen der Erfindung sind in weiteren Ansprüchen angegeben.

Das erfindungsgemässe Verfahren dient der Verarbeitung des Ausgangssignals eines in einer Kraftmessvorrichtung, insbesondere einer Waage, vorgesehenen Messumformers, durch den ein einer einwirkenden Last entsprechendes Messsignal gebildet wird, das in einem variablen analogen Filter und/oder, nach Verarbeitung in einem Analog/Digital-Wandler, in einem variablen digitalen Filter, gefiltert wird, um durch störende Einwirkungen, insbesondere durch Lastwechsel verursachte störende Signalanteile zu beseitigen.

Erfindungsgemäss wird das Messsignal hinsichtlich des Auftretens eines Lastwechsels überwacht, wobei nach Detektion eines Lastwechsels, wenigstens ein Filterparameter des Filters zurück gesetzt und in Funktion der Zeit entsprechend einem vorgesehenen Verlauf, vorzugsweise dem Verlauf einer Exponentialfunktion geändert wird, so dass das Filter nach der Detektion des Lastwechsels geöffnet und bis zu einer vorgegebenen Filtercharakteristik wieder geschlossen wird, die durch den Endwert des wenigstens einen Filterparameters bestimmt ist.

Das vorzugsweise vollständige Öffnen des Filters (Transferfunktion $G(z) = 1$) nach der Detektion eines Lastwechsels erlaubt es, den Laständerungen rasch zu folgen. Durch das anschliessende Schliessen des Filters bis zu einer vorgesehenen Filtercharakteristik werden Signalstörungen, insbesondere durch den Lastwechsel verursachte Schwingungen, anschliessend praktisch optimal unterdrückt. Insgesamt resultieren daher stark verkürzte Einschwingzeiten nach einem Lastwechsel. Durch eine geeignete Wahl der Endwerte der Filterparameter wird zudem sichergestellt, dass das Messsignal auch nach dem Einschwingen des Messsystems optimal gefiltert wird. Durch Anwendung des erfindungsgemässen Verfahrens resultieren daher, unter Vermeidung von Kompromissen, kürzeste Einschwingzeiten und gleichzeitig eine optimale Dämpfung störender Signale. Die Erfindung ist daher sowohl bei Dosierwaagen und bei Kontrollwaagen, bei denen ein rasches Ansprechen auf Laständerungen und ein geringer Nachlauf gefordert sind, als auch bei Hochpräzisionswaagen vorteilhaft anwendbar.

Obwohl das erfindungsgemässe Verfahren auch in analogen Signalverarbeitungsstufen anwendbar ist, wird dessen Anwendung hauptsächlich im Bereich digitaler Signalverarbeitung erfolgen. Digitale Filter sind in [8], U. Tietze, Ch. Schenk, Halbleiterschaltungstechnik, 11. Auflage, 1. Nachdruck, Springer Verlag, Berlin 1999, Kapitel 21 beschrieben. Zur bevorzugten Realisierung von IIR-Filtern mittels eines Signalprozessors siehe [8], Kapitel 21.7.2, Seiten 1181-1184.

Der vorzugsweise exponentielle Verlauf der nach der Detektion eines Lastwechsels und nach dem anschliessenden Rücksetzen des Filterparameters angewendeten Schliessfunktion wird normalerweise durch den Hersteller der Kraftmessvorrichtung vorgegeben; kann jedoch mittels eines Optimierungsverfahrens auch nach Inbetriebnahme der Kraftmessvorrichtung stetig optimiert werden.

Die Schliessfunktion wird vorzugsweise aus der Einschwingzeit des Filters abgeleitet, die von der Höhe des am Eingang des Filters zu erwartenden Rauschens sowie von der Auflösung der Kraftmessvorrichtung abhängig ist.

Die Schliessfunktion ist somit nicht abhängig von Störungen, die nach erfolgtem Lastwechsel tatsächlich auftreten, sondern von den Erwartungen des Verlaufs der Störungen. Da die auftretenden Einschwingvorgänge regelmässig exponentiell abklingen, decken sich die Erwartungen in den Verlauf der Störungen und somit der gewählten Schliessfunktion jedoch optimal mit den tatsächlichen Verhältnissen.

Besonders vorteilhaft ist daher, dass das Filter anhand der Schliessfunktion praktisch optimal an Einschwingvorgänge adaptiert wird und ein ansonsten erforderlicher Rechenaufwand weitgehend entfällt.

Die erfindungsgemässe Lösung unterscheidet sich daher grundsätzlich von Lösungen, bei denen die Filterfunktionen primär in Abhängigkeit tatsächlich auftretender Störungen eingestellt werden, wobei beispielsweise die Grösse der Störungen gemessen (siehe [7]) oder die Frequenzbereiche der Störungen beispielsweise mittels FFT (Fast Fourier Transformation) bestimmt und die Filterparameter optimiert werden. Diese Optimierung ist beim erfindungsgemässen Verfahren nicht erforderlich, um gute Messresultate zu erzielen, kann aber in vorzugsweisen Ausgestaltungen zusätzlich angewendet werden. Dabei können eine Schliessfunktion oder die Endwerte der Filterparameter r, die bereits gute Resultate liefern, weiter optimiert werden. Beispielsweise kann auch die Nullstelle eines FIR-Filters auf eine Frequenz gesetzt werden, für die störende Einwirkungen festgestellt wurden.

Das digitale Filter ist vorzugsweise ein in einer Filterstufe angeordnetes rekursives oder nicht-rekursives Filter n-ter Ordnung vorzugsweise ein IIR-Filter (beispielsweise achter Ordnung) oder ein FIR-Filter, dem ein der Detektion von Lastwechseln dienendes Detektormodul und ein Generatormodul individuell zugeordnet sind, das der Erzeugung von Werten für den Filterparameter dient, welche zum Verlauf der Schliessfunktion korrespondieren.

In [8], Kapitel 21.8, Seiten 1184 und 1185 ist ein Vergleich von FIR- und IIR-Filtern enthalten. Aus Abb. 21.53. ist ersichtlich, dass die erforderliche Ordnung für ein FIR-Filter mehr als doppelt so hoch ist, wie bei einem IIR-Filter. Vorzugsweise wird daher zumindest ein IIR-Filter n-ter Ordnung verwendet. Zu beachten ist jedoch, dass für die Berechnung der Filterparameter für ein Filter höherer Ordnung ein relativ hoher Aufwand resultiert.

In einer weiteren vorzugsweisen Ausgestaltung der Erfindung werden daher mehrere diskrete Filterstufen, die je ein Filter erster Ordnung aufweisen, mit vorzugsweise logarithmisch verteilten Bandbereiten seriell hintereinander geschaltet, und derart miteinander verbunden, dass das Messsignal sequentiell in allen Filterstufen bearbeitet und die Detektion eines Lastwechsels in einer der Filterstufen den anderen Filterstufen gemeldet wird. Für jede der Filterstufen sind daher eine entsprechend angepasste Schliessfunktion und ein individueller Endwert des Filterparameters vorgesehen.

Durch diese Massnahme resultieren deutlich weniger Filterparameter, die zudem einfacher berechnet und verändert werden können.

Vorzugsweise werden die der Zufuhr und Entnahme des Messsignals dienenden Ein- und Ausgänge der Filterstufen nach der Detektion eines Lastwechsels zumindest für eine Abtastperiode miteinander verbunden, so dass das Messsignal die Filterstufen unbearbeitet passieren und die Anzeige dem Lastwechsel rasch folgen kann.

Besonders wichtig bei der Durchführung des erfindungsgemässen Verfahrens ist, dass die Lastwechsel frühzeitig und zuverlässig erkannt werden.

In einer vorzugsweisen Ausgestaltung wird das Messsignal oder dessen Ableitung im Detektormodul vorzugsweise über ein Begrenzermodul einem ersten Integratormodul und über ein Invertermodul einem zweiten Integratormodul zugeführt, wonach die am Ausgang der Integratormodule resultierenden Signale in einem Komparatormodul mit einem Schwellwert verglichen werden, nach dessen Überschreiten das Generatormodul und vorzugsweise auch das Detektormodul zurück gesetzt werden. Das erste Integratormodul dient dabei der Detektion von Erhöhungen und das zweite Integratormodul der Detektion von Reduktionen der Last.

Indem die Ableitung des Messsignals und vorzugsweise ein Driftkompensationssignal den Integratormodulen zugeführt werden, wird bewirkt, dass sich die Ausgangssignale der Integratormodule nur dann ändern, wenn auch eine Änderung der Last vorliegt.

Durch das Rücksetzen des Generatormoduls erfolgt die oben beschriebene Änderung des Filterparameters. Das Rücksetzen des Detektormoduls schafft die Voraussetzung, dass die Integratormodule ausgehend von der geänderten Last und in deren Ausgangsposition, die weiteren Laständerungen korrekt erfassen können.

Möglich ist die Detektion eines Lastwechsels ferner durch einen Vergleich des Abstands der Nulldurchgänge der Ableitung des Messsignals mit einem Schwellwert. Bei einer Laständerung tritt beim abgeleiteten Signal nämlich eine Halbwelle mit zwei Nullstellen auf, deren gegenseitiger Abstand von der Höhe der Laständerung abhängig ist. Sofern zwischen den beiden Nullstellen weitere durch Störungen verursachte Nullstellen auftreten, besteht bei dieser Lösung jedoch die Gefahr, dass der Lastwechsel nicht erkannt wird.

In weiteren vorzugsweisen Ausgestaltungen können zur oben erwähnten Optimierung der Kraftmessvorrichtung die Schliessfunktion und/oder der Endwert des Filterparameters schrittweise geändert und die resultierenden Auswirkungen anhand wenigstens eines gespeicherten Signalverlaufs festgestellt werden, wonach derjenige Verlauf der Schliessfunktion und derjenige Endwert des Filterparameters für die zukünftige Signalverarbeitung übernommen werden, für die die kürzeste Einschwingzeit bei einem Lastwechsel bzw. nach dem Einschwingen der Kraftmessvorrichtung das geringste Rauschen festgestellt wurden. Zu beachten ist hier wiederum, dass durch das erfindungsgemässe Verfahren und den einfachen Aufbau der Filterstruktur, mit der reduzierten Anzahl der Filterparameter, auch die Optimierung der Kraftmessvorrichtung einfacher und schneller durchführbar ist.

Zusätzlich zu den variablen Filtern können ferner feste Filter eingesetzt werden, mittels derer eine gewünschte minimale Filterung der Messsignale erfolgt, falls die Transferfunktionen des variablen Filters n-ter Ordnung oder der kaskadierten variablen Filter tieferer Ordnung zurück gesetzt werden. Wie bereits erwähnt, können die kaskadierten variablen Filter zudem aus rekursiven und/oder nicht-rekursiven Filtern bestehen. Besonders vorteilhaft ist die Verwendung einer Filterkaskade mit rekursiven Filtern, denen wenigstens ein nicht-rekursives Filter nachgeschaltet ist, das der Reduktion der rekursiven Signalanteile und somit der Stabilisierung des Ausgangssignals der Filterkaskade dient.

Nachfolgend wird die Erfindung anhand von Zeichnungen näher erläutert. Dabei zeigt:

Figur 1     eine erfindungsgemässe Waage 1 in beispielhafter Ausgestaltung mit symbolisch dargestellten Einwirkungen $d_M$ und $d_L$, die den Signalverlauf des Messsignals störend beeinflussen können;

Figur 2     das Blockschaltbild der Waage 1 von Figur 1, mit einem Messumformer 10, der über eine analoge Signalverarbeitungseinheit 11 und einen Analog/Digital-Wandler 12 mit einer digitalen Signalverarbeitungseinheit 13 verbunden ist, von der die verarbeiteten Signale an einen Prozessor 16 abgegeben werden, der diese an eine Ausgabeeinheit 17, 18 weiterleitet;

Figur 3     das Blockschaltbild von Figur 2 ergänzt mit Detektormodulen 111, 131, mittels derer Laständerungen detektierbar und Generatormodule 112, 132 steuerbar sind, durch die die Eigenschaften der in der analogen und digitalen Signalverarbeitungseinheit 11, 13 vorgesehenen Filter 113, 133 nach Detektion eines Lastwechsels entsprechend dem Verlauf eine Schliessfunktion änderbar sind;

Figur 4    eine Filterstufe 130 mit einem IIF-Filter erster Ordnung, das mittels eines Detektormoduls 131 und eines Generatormoduls 132 beim Auftreten von Laständerungen erfindungsgemäss steuerbar ist;

Figur 5    eine erfindungsgemässe digitale Signalverarbeitungseinheit 13 mit n Filterstufen $130_1$, ..., $130_n$ gemäss Figur 4;

Figur 6    die Signalverarbeitungseinheit 13 von Figur 5 ergänzt mit einem Optimierungsmodul 135, mittels dessen die Filterparameter der Filterstufen $130_1$, ..., $130_n$ optimierbar sind; und

Figur 7    den Verlauf des Messsignals nach einem erfolgtem Lastwechsel.

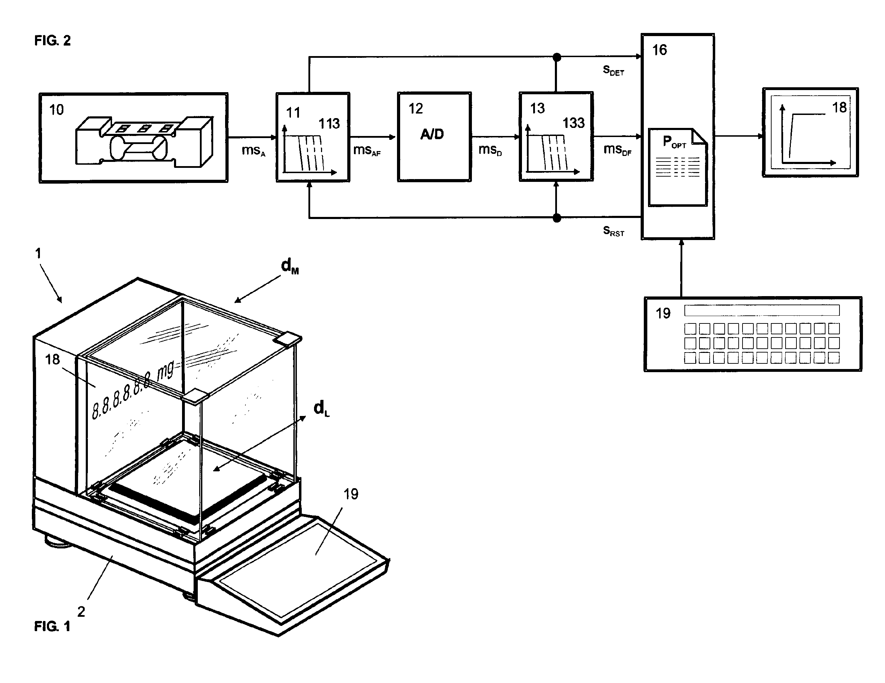

Figur 1 zeigt eine erfindungsgemässe Waage 1 in beispielhafter Ausgestaltung mit symbolisch dargestellten äusseren Einwirkungen $d_M$ und $d_L$, die den Verlauf des Messsignals ms wesentlich beeinflussen. Einerseits ändert der Signalverlauf in Abhängigkeit von Änderungen der Last $d_L$. Ferner ändert der Signalverlauf auch in Abhängigkeit von mechanischen Einwirkungen $d_M$, wie Vibrationen und Stössen, durch die Teile der Waage, insbesondere der Messumformer oder Teile davon in Schwingung versetzt werden. Auch nach Änderung $d_L$ der Lasteinwirkung resultieren daher jeweils Einschwingvorgänge, die das Nutzsignal überlagern. Aufgabe der in der Waage 1 vorgesehenen Signalverarbeitungseinheit ist es daher, den zur Last korrespondierenden Signalanteil möglichst gut und möglichst schnell von störenden Signalanteilen zu trennen, die durch Vibrationen, Stösse und Laständerungen verursacht werden.

Besonders wichtig ist dies bei Waagen, bei denen Laständerungen jeweils in kurzen zeitlichen Abständen vollzogen werden. Insbesondere bei Waagen mit hoher Auflösung ist es ferner notwendig, dass das Rauschen auch nach Abklingen der Einschwingvorgänge genügend gut reduziert wird.

Figur 2 zeigt in beispielhafter Darstellung das Blockschaltbild der in Figur 1 gezeigten Waage 1, die einen Messumformer 10 aufweist, der ein zu einer Last korrespondierendes analoges Messsignal $ms_A$ über eine zur Verarbeitung analoger Signale dienende erste Signalverarbeitungseinheit 11 an einen Analog/Digital-Wandler 12 abgibt (siehe das gefilterte Signal $ms_{AF}$), welcher das digitalisierte Messsignal $ms_D$ an eine zur Verarbeitung digitaler Signale dienende zweite Signalverarbeitungseinheit 13 abgibt, von der das gefilterte digitale Messsignal $ms_{DF}$ an einen Prozessor 16 abgegeben wird, der mit einer Tastatur 19 und mit einer Anzeige 18, beispielsweise einer Flüssigkristallanzeige, verbunden ist, auf der die Messresultate angezeigt werden.

Von den Signalverarbeitungseinheiten 11, 13 werden über eine erste Steuerleitung Detektionssignale $s_{DET}$, die dem Melden von Laständerungen dienen, zum Prozessor 16 übertragen, der nach Erhalt eines Detektionssignals $s_{DET}$ ein Resetsignal $s_{RST}$ zu den Signalverarbeitungseinheiten 11, 13 retourniert, mittels dessen die darin vorgesehenen Filter 113, 133 geöffnet und entsprechend dem Verlauf wenigstens einer Schliessfunktion $f_C(t)$ wieder geschlossen werden.

Das vorzugsweise vollständige Öffnen des Filters nach der Detektion eines Lastwechsels erlaubt es, den Laständerungen rasch zu folgen. Durch das anschliessende Schliessen der Filter 113, 133 bis zu einer vorgesehenen Filtercharakteristik, beispielsweise der Charakteristik eines Tiefpasses mit geringer Bandbreite, werden Signalstörungen, insbesondere durch den Lastwechsel verursachte Schwingungen und später auftretende Signalstörungen, optimal unterdrückt.

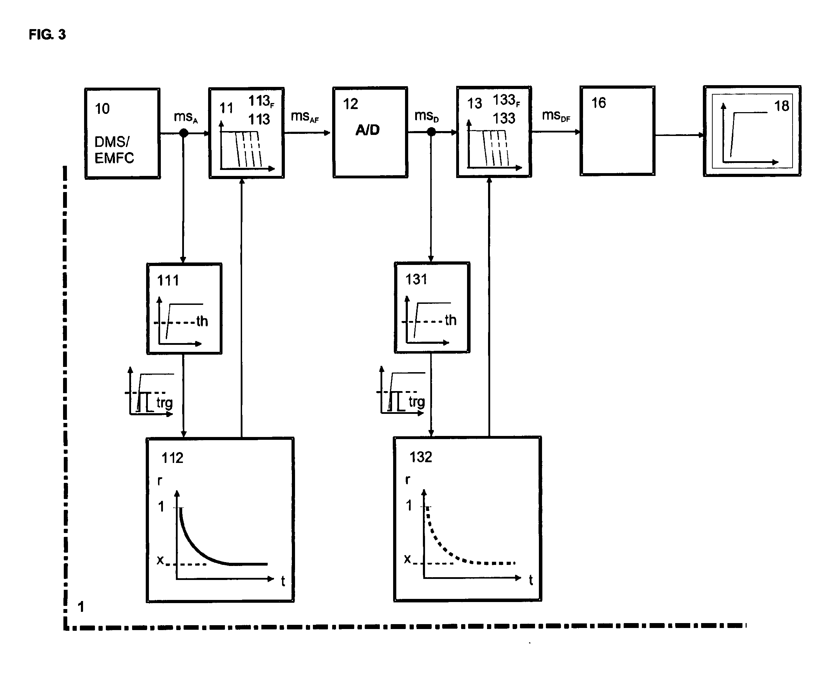

In Figur 3 ist die Schaltungsanordnung von Figur 2 in allgemeinerer Form gezeigt, wobei nicht definiert ist, durch welche Module (Prozessor, Signalprozessoren, diskrete Schaltungen oder Softwaremodule) die für die Durchführung des erfindungsgemässen Verfahrens erforderlichen Funktionen und die Rechenleistung zur Verfügung gestellt werden. Das am Eingang der analogen Signalverarbeitungseinheit 11 anliegende analoge Messsignal $ms_A$ und das am Eingang der digitalen Signalverarbeitungseinheit 13 anliegende digitale Messsignal $ms_D$ werden in dieser Schaltungsanordnung je einem Detektormodul 111 bzw. 131 zugeführt, durch die die eintreffenden Signale $ms_A$ bzw. $ms_D$ mit einem Schwellwert th verglichen werden, nach dessen Überschreiten ein Generatormodul 112 bzw. 132 getriggert wird (siehe die Triggersignale trg), durch das der wenigstens eine Filterparameter r des Filters 113 bzw. 133 zurückgesetzt und anschliessend entsprechend der vorgegebenen Schliessfunktion $f_C(t)$ zurück zu einem vorgegebenen Endwert gefahren werden.

Mit der Schaltung von Figur 3 ist es somit möglich, analoge und/oder digitale Filter 113, 133 erfindungsgemäss zu steuern. In der analogen Signalverarbeitungseinheit 11 werden vorzugsweise aktive Filter 113 mit einstellbaren Filterparametern verwendet, wie sie in [8], Kapitel 13, Seiten 888 bis 893 beschrieben sind. Die elektronische Steuerung der Filterparameter ist auf Seite 891 beschrieben.

In der digitalen Signalverarbeitungseinheit 13 werden digitale Filter 133 mit einstellbaren Filterparametern verwendet, wie sie in [8], Kapitel 21 beschrieben sind. Selbstverständlich ist die Steuerung der Filterparameter bei dieser Lösung einfacher realisierbar, indem beispielsweise der Filterparameter in einem Register des verwendeten Signalprozessors schrittweise geändert wird.

Gemäss [8], Seite 1133 geht man in mehr und mehr dazu über, die Signalverarbeitung nicht analog sondern digital durchzuführen. Die Vorteile liegen gemäss [8] in der höheren Genauigkeit und Reproduzierbarkeit sowie in der geringeren Störempfindlichkeit. Für das vorliegende Verfahren ist insbesondere die einfache und präzise Steuerbarkeit der digitalen Filter von Bedeutung.

Nachfolgend wird die Erfindung daher primär in Hinsicht auf die Realisierung mittels digitaler Filter beschrieben.

Aufbau, Arbeitsweise und Eigenschaften digitaler Filter sind in [8], Kapitel 21 beschrieben. Elektronische Waagen mit digitalen Filtern sind beispielsweise aus [6] und [7] bekannt. Die Realisierung von digitalen Filtern mittels eines Signalprozessors ist in [8], Kapitel 21.7.2, Seiten 1181-1184 beschrieben.

Sofern ein Signalprozessor verwendet wird, bildet dieser im Wesentlichen selbst die digitale Signalverarbeitungseinheit 13. Die genannten Module, das Detektormodul 131, das Generatormodul 132 und das Filter 133, durch die eine Filterstufe 130 gebildet wird, basieren daher auf implementierten Softwaremodulen.

Aus [8], Seiten 1157 und 1158 ist ersichtlich, dass mit Filtern höherer Ordnung eine verbesserte Annäherung an einen Wunschfrequenzgang möglich ist. Auch in Waagen werden daher vorzugsweise Filter höherer Ordnung angewendet. Beispielsweise wird im Blockschaltbild von Figur 3 ein Filter 133 achter Ordnung eingesetzt, dessen Filterparameter r1, ..., rx vom Generatormodul 132 derart änderbar sind, dass nach der Detektion eines Lastwechsels der Frequenzgang des Filters 133 optimale an die auftretenden Schwingungen adaptiert wird.

Dabei ergibt sich der Vorteil, dass die Steuerung des Filters 133 mit nur einem Detektormodul 131 und nur einem Generatormodul 132 möglich ist. Allerdings erfordert die Bestimmung der Filterparameter r1, ..., rx bzw. die Bestimmung der einzelnen Funktionsverläufe $f_{c1}(t)$ bis $f_{cx}(t)$ Verläufe und der Endwerte der Filterparameter r1, ..., rx sowie deren Implementierung einen hohen Aufwand.

In einer weiteren vorzugsweisen Ausgestaltung der Erfindung wird das Filter höherer Ordnung daher durch kaskadierte Teilfilter tieferer Ordnung, vorzugsweise erster Ordnung ersetzt, denen je ein Detektormodul 131 und ein Generatormodul 132 zugeordnet sind. Die Kaskadierung von Teilfiltern, durch die ein Filter n-ter Ordnung gebildet werden kann, ist in [8], Seiten 1146-1147 und 1174 beschrieben.

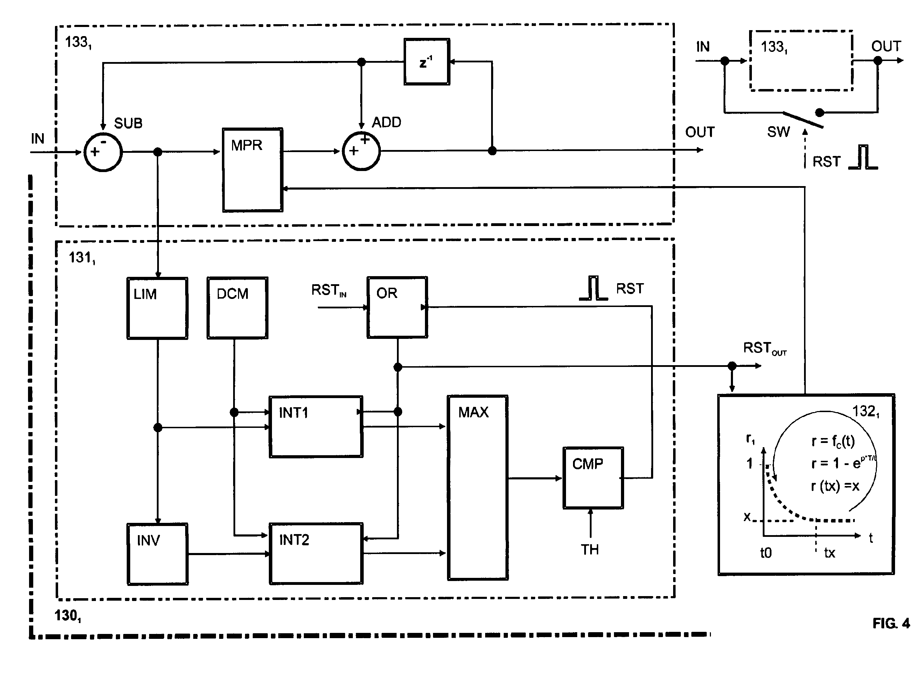

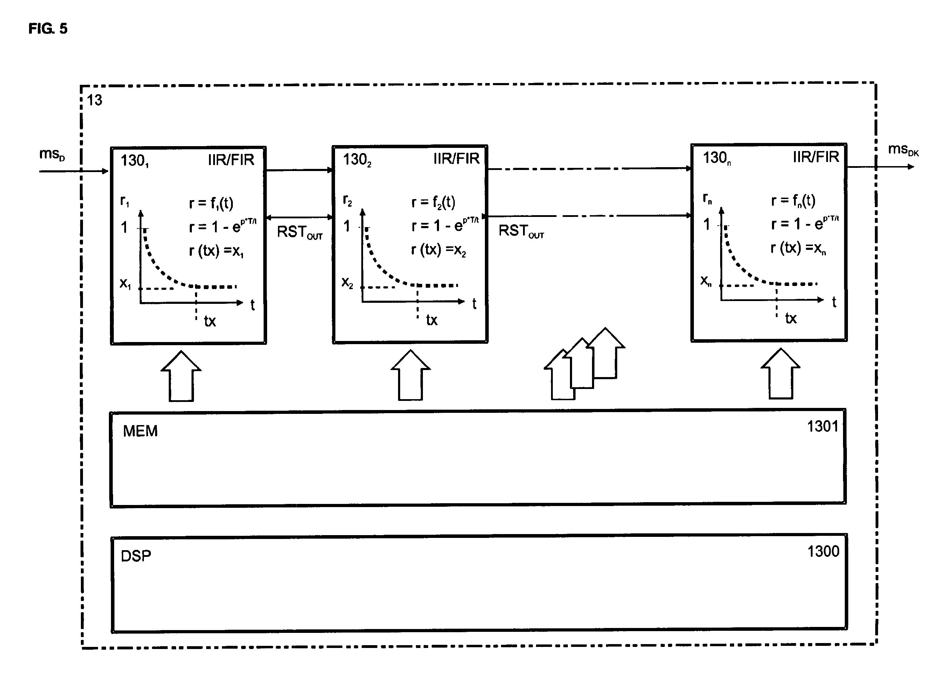

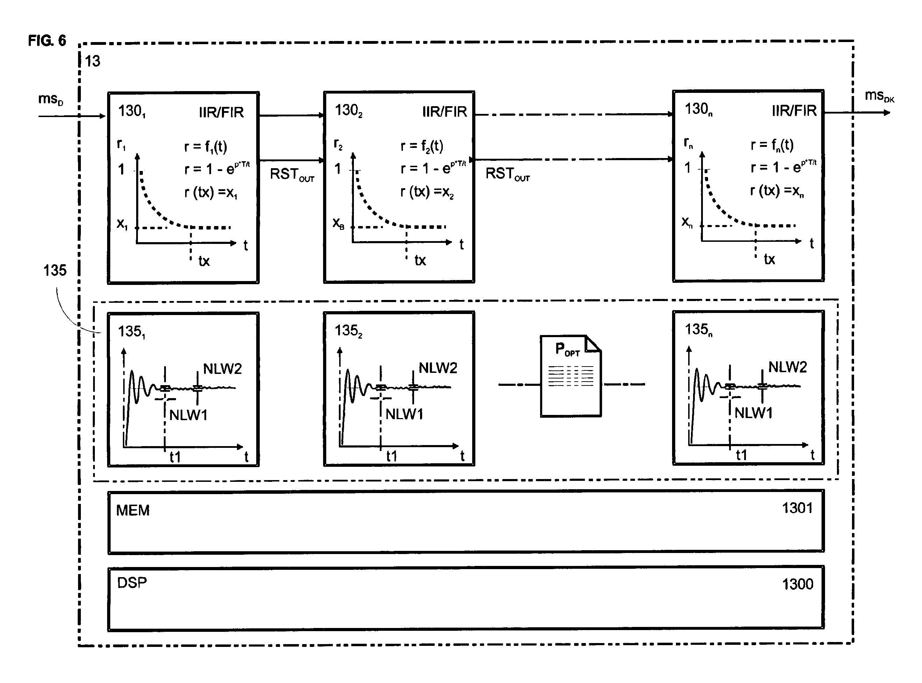

In Figur 4 ist ein digitales Filter $133_1$ erster Ordnung mit einer Subtraktionsstufe SUB, einer Additionsstufe ADD und einer Multiplikationsstufe MPR gezeigt, das zusammen mit einem Generatormodul $132_1$ eine Filterstufe $130_1$ bildet, die, wie in den Figuren 5 und 6 gezeigt, vorzugsweise Teil einer Kaskade von Filterstufen $130_1$, ..., $130_n$ ist, durch die ein erfindungsgemäss gesteuertes Filter n-ter Ordnung gebildet wird.

Die Funktion des digitalen Filters $133_1$ ist aus [8], Kapitel 21 bekannt. Zu beachten ist, dass der in der Multiplikationsstufe MPR vorgesehene Filterparameter r, der die Transferfunktion des Filters $133_1$ wie folgt bestimmt:

$$G(z) = r*z / (z - (1 - r))$$

durch das Generatormodul $132_1$ vorgegeben wird.

Ferner ist zu beachten, dass, falls der Filterparameter r auf den Wert 1 zurückgesetzt wird, die Transferfunktion ebenfalls G(z) gleich 1 wird und das Filter $133_1$ die Eingangssignale ungefiltert passieren lässt.

Weiter ist zu beachten, dass am Ausgang der Subtraktionsstufe SUB die erste Ableitung des Messsignals anliegt, die dem Detektormodul $131_1$ zugeführt wird. Durch das Ausgangsignal der Subtraktionsstufe SUB wird daher angezeigt, in welchem Mass sich das Eingangssignal der Filterstufe $130_1$ ändert. Zur Feststellung, ob die Änderungen auf einen Lastwechsel zurückzuführen sind, wird das Ausgangssignal der Subtraktionsstufe SUB über ein vorzugsweise vorgesehenes Begrenzermodul LIM einem ersten und über einen Inverter INV einem zweiten Integratormodul INT1 bzw. INT2 zugeführt. Das grössere Ausgangssignal der beiden Integratormodule INT1, INT2 wird von einem Modul MAX selektiert und einem Komparator CMP zugeführt, der dieses mit einem Schwellwert TH vergleicht und nach dessen Überschreiten ein Triggersignal RST abgibt.

Durch das Triggersignal RST wird das nachgeschaltete Generatormodul $132_1$ aktiviert, welches den Filterparameter r für den Zeitpunkt t=0 zumindest annähernd auf den Wert 1 setzt und anschliessend entsprechend der vorgesehenen Schliessfunktion $f_C(t)$ ändert, bis der Filterparameter r zum Zeitpunkt tx den Endwert x annimmt, wo er bis zum Eintreffen des nächsten Triggersignals RST gehalten bleibt. Ferner wird das Detektormodul $131_1$ (bzw. die Integratormodule INT1, INT2) zurückgesetzt, damit weitere Lastwechsel detektiert werden können. Zur Korrektur von Driftabweichungen ist ein Driftkompensationsmodul DCM mit Eingängen der Integratormodule INT1, INT2 verbunden, durch das ein Wegdriften der Ausgangssignale bei konstanter Last verhindert wird.

In den Integratormodule INT1, INT2 erfolgt vorzugsweise eine kumulierte Summation (CUSUM) von aktuell vorliegenden Signalen und rekursiv ermittelten Signalen. Das erste Integratormodul INT1 überwacht dabei positive und das zweite Integratormodul INT2 negative Lastwechsel.

Mit dieser Methode können kleine Änderungen im Signal und somit kleine Lastwechsel schnell und präzise erfasst werden.

Da es sinnvoll ist, dass auch die Detektion von den anderen Filterstufen $130_2$ ... detektierten Lastwechseln berücksichtigt werden, ist im Detektormodul 1311 ein ODER-Tor OR vorgesehen dem die Triggersignale RST, $RST_{IN}$ des lokalen Komparators CMP sowie der weiteren Filterstufen $130_2$ ... zuführbar sind. Das Generatormodul $132_1$ wird daher durch das am Ausgang des ODER-Tors OR anliegende Signal gesteuert, welches weiter zu den anderen Filterstufen $130_2$ ... geführt wird.

Durch das am Ausgang des ODER-Tors OR anliegende Signal $RST_{OUT}$ wird ferner der in Figur 4 symbolisch gezeigte, vorzugsweise vorgesehene Schalter SW gesteuert, der das Filter $133_1$ nach Auftreten eines Lastwechsels vorzugsweise während wenigstens einer Abtastperiode Ts überbrückt.

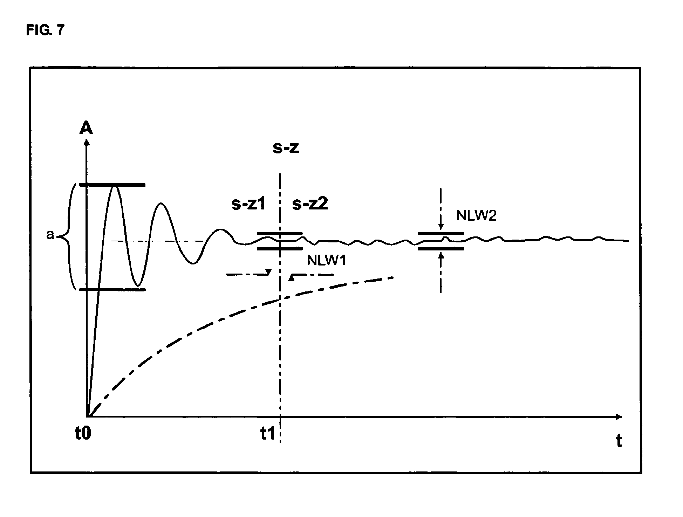

Die nach Detektion eines Lastwechsels angewendete Schliessfunktion $f_C(t)$ wird vorzugsweise aus der Einschwingzeit des Filters abgeleitet, die von der Höhe des am Eingang des Filters zu erwartenden Rauschens a (siehe Figur 7) sowie von der Auflösung A der Kraftmessvorrichtung abhängig ist.

Eine geeignete Schliessfunktion $f_C(t)$ kann wie folgt ermittelt werden. Anhand der Amplitude a des Rauschens und der Auflösung A der Waage wird der Faktor $\rho$ ermittelt:

$$\rho \; = \; 1 \; / \; (a \; * \; A)$$

Mit der Abtastzeit Ts und der nach dem Lastwechsel verstrichenen Zeit ti, wobei ti = Ts beim Lastwechsel, wird der Filterparameter r vorzugsweise wie folgt gewählt:

$$r \; = \; 1 \; - \; e^{[\ln \rho \; * \; (Ts/ti)]} \; bzw. \; r \; = \; 1 \; - \; \rho^{(Ts/ti)}$$

Die Schliessfunktion $f_C(t)$, mit der der Filterparameter r verändert wird, hängt also nur von dem am Eingang des Filters $133_1$ auftretenden Rauschens a und der gewünschten Auflösung A ab. Dem Verlauf der Schliessfunktion $f_C(t)$ wird nur bis zu einem Endwert x (r = x {0<x<=1}) gefolgt, der für eine zu verbleibende Bandbreite berechnet wurde. Da der Faktor $\rho$ klein ist ($\rho$ << 1; $\rho$ > 0), nimmt [ln $\rho$] einen negativen Wert an (beispielsweise den Wert -10), der zum Zeitpunkt des Lastwechsels den Wert des Exponenten [ln $\rho$ * (Ts/ti)] bestimmt, da Ts/ti zu diesem Zeitpunkt etwa gleich 1 ist. Konsequenterweise resultiert für $e^{[\ln \rho \; * \; (Ts/ti)]}$ ein Wert nahe Null und somit für r ein Wert nahe 1 mit einer resultierenden Transferfunktion G(z) von ungefähr gleich 1.

Figur 5 zeigt eine erfindungsgemässe digitale Signalverarbeitungseinheit 13 mit n Filterstufen $130_1$, ..., $130_n$, die zusammen ein Filter n-ter Ordnung bilden und denen Filterparameter $r_1$, ...., $r_n$ und Schliessfunktionen $f_{c1}(t)$, ..., $f_{cn}(t)$ individuell zugeordnet sind. Die oben beschriebenen Module der Filterstufen $130_1$, ..., $130_n$ sind mittels eines Softwareprogramms realisiert, das in einem Speicher 1301 abgelegt ist und von einem Signalprozessor 1300 abgearbeitet wird.

Figur 6 zeigt die digitale Signalverarbeitungseinheit 13 von Figur 5 mit einem Optimierungsmodul 135, mittels dessen die Filterparameter $r_1$, ..., $r_n$ bzw. deren Endwerte $r_{1x}$, ...., $r_{nx}$ und Schliessfunktionen $f_{c1}(t)$, ..., $f_{cn}(t)$ individuell optimierbar sind.

Das Optimierungsmodul 135, das mittels eines Programms $P_{OPT}$ implementiert wird, wird nachstehend anhand des in Figur 7 gezeigten Signalverlaufs s-z näher erläutert. Für die Dauer der Einschwingzeit des Messsystems sind primär die Schliessfunktionen $f_{c1}(t)$, ..., $f_{cn}(t)$ relevant. Anhand des Optimierungsprogramms $P_{OPT}$ werden in einer ersten Optimierungsphase daher die Schliessfunktionen $f_{c1}(t)$, ..., $f_{cn}(t)$ schrittweise variiert und auf den gespeicherten Signalverlauf s-z angewendet, wonach geprüft wird, zu welchem Zeitpunkt t1 die abklingenden Signale innerhalb den Schranken eines ersten Fensters NLW1 liegen. Bei dem Prüfschritt, bei dem die kürzeste Zeit t1 registriert wurde, liegen daher optimale Verläufe der Schliessfunktionen $f_{c1}(t)$, ..., $f_{cn}(t)$ vor, die sodann in den Filterstufen $130_1$, ..., $130_n$ angewendet werden. Für den Rauschpegel des Messsignals, der nach dem Einschwingen des Messsystems vorliegt, sind die Endwerte $x_1$, ..., $x_n$ der Filterparameter $r_1$, ..., $r_n$ relevant. Anhand des Optimierungsprogramms $P_{OPT}$ werden in einer zweiten Optimierungsphase daher die Endwerte $x_1$, ..., $x_n$ der Filterparameter $r_1$, ..., $r_n$ schrittweise variiert und auf den gespeicherten Signalverlauf s-z angewendet, wonach geprüft wird, für welche Endwerte $x_1$, ..., $x_n$ ein das Rauschen begrenzendes zweites Fenster NLW2 am besten geschlossen werden kann. Vorzugsweise erfolgt die Optimierung der Waage anhand mehrerer Signalverläufe die unter günstigen Operationsbedingungen der Waage 1 aufgenommen wurden.

Das erfindungsgemässe Verfahren und die erfindungsgemässe Waage 1 wurden in bevorzugten Ausgestaltungen beschrieben und dargestellt. Die Kraftmessvorrichtung wurde in der Ausgestaltung einer Waage 1 beschrieben. Die Erfindung ist jedoch auch bei anderen Kraftmessvorrichtungen, wie gravimetrischen Messgeräten, Wägemodulen, Lastzellen und Kraftsensoren, die gegebenenfalls Teil einer Waage bilden können, einsetzbar.

Ferner wurde aufgezeigt, dass die Erfindungsidee in Kombination mit verschiedenen Technologien, wie Analogtechnik oder Digitaltechnik anwendbar oder als Softwarelösung in Verbindung mit einem Signalprozessor realisierbar ist.

Ferner ist die Erfindung natürlich nicht auf die vorgestellten Filter beschränkt, sondern kann mit beliebigen variablen Filtern beliebiger Ordnung realisiert werden.

Literaturverzeichnis

[1] Bauen Sie Ihre Qualität auf solidem Grund!, Firmenbrochure, Mettler Toldeo GmbH, Januar 2001
[2] Wägefibel, Mettler Toldeo GmbH, April 2001
[3] CH 673 529 A5
[4] DE 10024986 A1
[5] US 5, 665, 941
[6] US 2004/0088342 A1
[7] US 6,271,484 B1
[8] U. Tietze, Ch. Schenk, Halbleiterschaltungstechnik, 11. Auflage, 1. Nachdruck, Springer Verlag, Berlin 1999
[9] US 5, 190, 115
[10] US 4,705,126

**Patentansprüche**

1. Verfahren zur Verarbeitung des Ausgangssignals eines in einer Kraftmessvorrichtung (1), insbesondere einer Waage, vorgesehenen Messumformers (10), durch den ein einer einwirkenden Last entsprechendes Messsignal (ms) gebildet wird, das in einem variablen analogen Filter (113) und/oder, nach Verarbeitung in einem Analog/Digital-Wandler (12), in einem variablen digitalen Filter (133), gefiltert wird, um durch störende Einwirkungen, insbesondere durch Lastwechsel verursachte, störende Signalanteile zu beseitigen, wobei das Messsignal (ms) hinsichtlich des Auftretens eines Lastwechsels überwacht wird, und nach Detektion eines Lastwechsels, wenigstens ein Filterparameter (r) des Filters (113; 133) zurück gesetzt und in Funktion der Zeit entsprechend einem vorgesehenen Verlauf $f_C(t)$ geändert wird, so dass das Filter (113; 133) nach der Detektion des Lastwechsels geöffnet und bis zu einer vorgegebenen Filtercharakteristik wieder geschlossen wird, die durch einen Endwert (x) des wenigstens einen Filterparameters (r) bestimmt ist.

2. Verfahren nach Anspruch 1, **dadurch gekennzeichnet, dass** der Verlauf der Funktion $f_C(t)$ durch eine Exponentialfunktion bestimmt wird.

3. Verfahren nach Anspruch 1 oder 2, **dadurch gekennzeichnet, dass** das digitale Filter (133) ein in einer Filterstufe (130) angeordnetes rekursives oder nicht-rekursives Filter n-ter Ordnung, vorzugsweise ein IIR-Filter oder ein FIR-Filter ist, dem ein der Detektion von Lastwechseln dienendes Detektormodul (131) und ein Generatormodul (132) individuell zugeordnet sind, das der Erzeugung von Werten für den Filterparameter (r) dient, welche zum Verlauf der Funktion $f_C(t)$ korrespondieren.

4. Verfahren nach Anspruch 3, **dadurch gekennzeichnet, dass** mehrere diskrete Filterstufen ($130_1$, ..., $130_n$) mit je einem Filter (133) tiefer Ordnung, vorzugsweise erster Ordnung, und vorzugsweise logarithmisch verteilten Bandbreiten seriell hinter einander geschaltet, und derart miteinander verbunden sind, dass das Messsignal ($ms_D$) sequentiell in allen Filterstufen ($130_1$, ..., $130_n$) bearbeitet und die Detektion eines Lastwechsels in einer der Filterstufen ($130_1$) den anderen Filterstufen ($130_2$, ..., $130_n$) gemeldet wird.

5. Verfahren nach Anspruch 3 oder 4, **dadurch gekennzeichnet, dass** nach Detektion eines Lastwechsels die der Zufuhr und Entnahme des Messsignals ($ms_D$) dienenden Ein- und Ausgänge der Filterstufen ($130_1$, ..., $130_n$) zumindest für eine Abtastperiode ($T_A$) miteinander verbunden werden, so dass das Messsignal ($ms_D$) die Filterstufen ($130_1$, ..., $130_n$) unbearbeitet passieren kann.

6. Verfahren nach Anspruch 3, 4 oder 5, **dadurch gekennzeichnet, dass** das Messsignal ($ms_D$) oder dessen Ableitung im Detektormodul (131) vorzugsweise über ein Begrenzermodul (LIM) einem ersten und über ein Invertermodul (INV) einem zweiten Integratormodul (INT1; INT2) zugeführt wird, wonach die am Ausgang der Integratormodule (INT1; INT2) resultierenden Signale in einem Komparatormodul (CMP) mit einem Schwellwert (TH) verglichen wird, nach dessen Überschreiten das Generatormodul (132) und vorzugsweise auch das Detektormodul (131) zurück gesetzt werden; oder, dass der Abstand der Nulldurchgänge der Ableitung des Messsignals ($ms_D$) in einem Komparatormodul mit einem Schwellwert verglichen wird, nach dessen Überschreiten der das Generatormodul (132) und vorzugsweise auch das Detektormodul (131) zurück gesetzt werden.

7. Verfahren nach einem der Ansprüche 3 bis 6, **dadurch gekennzeichnet, dass** der Filterparameter (r) nach Detektion eines Lastwechsels auf einen Wert zurück gesetzt wird, der bewirkt, dass die Transferfunktion G(z) des Filters (133) zumindest annähernd gleich 1 ist und/oder dass die Variation des zurück gesetzten Filterparameters (r) exponentiell in Abhängigkeit des beim Lastwechsel auftretenden Rauschens und der Auflösung der Kraftmessvorrichtung (1) gewählt wird.

8. Verfahren nach einem der Ansprüche 3 bis 7, **dadurch gekennzeichnet, dass** zur Optimierung der Kraftmessvorrichtung (1) die Funktion $f_C(t)$, welche die Variation des Filterparameters (r) bestimmt, und/oder der Endwert (x) des Filterparameters (r) schrittweise geändert und die resultierenden Auswirkungen anhand wenigstens eines gespeicherten Signalverlaufs (s-z) festgestellt werden, wonach derjenige Verlauf der Funktion $f_C(t)$ und derjenige Endwert (x) des Filterparameters (r) für die zukünftige Signalverarbeitung übernommen werden, für die die kürzeste Einschwingzeit bei einem Lastwechsel bzw. nach dem Einschwingen der Kraftmessvorrichtung (1) das geringste Rauschen festgestellt wurden.

9. Kraftmessvorrichtung (1), insbesondere Waage (1), geeignet zur Durchführung des Verfahrens nach einem der Ansprüche 1 bis 8, mit wenigstens einem Prozessor (1300; 16), wenigstens einer Speichereinheit (1301) und einem Messumformer (10), durch den ein einer einwirkenden Last entsprechendes Messsignal (ms) gebildet wird, das in einem variablen analogen Filter (113) und/oder, nach Verarbeitung in einem Analog/Digital-Wandler (12), in einem variablen digitalen Filter (133), filterbar ist, um durch störende Einwirkungen, insbesondere durch Lastwechsel verursachte störende Signalanteile zu beseitigen, wobei wenigstens ein zur Überwachung des Messsignals (ms; $ms_A$; $ms_D$) und zur Detektion von Lastwechseln geeignetes Detektormodul (111; 131) vorgesehen ist, welches ein Generatormodul (112; 132) steuert, das zum Rücksetzen wenigstens eines Filterparameters (r) des Filters (113; 133) und zur Änderung des Filterparameters (r) in Funktion der Zeit entsprechend einem vorgesehenen Verlauf $f_C(t)$ geeignet ist, so dass das Filter (113; 133) nach der Detektion des Lastwechsels geöffnet und bis zu einer vorgegebenen Filtercharakteristik wieder geschlossen werden kann, die durch einen Endwert (x) des wenigstens einen Filterparameters (r) bestimmt ist.

10. Kraftmessvorrichtung (1) nach Anspruch 9, **dadurch gekennzeichnet, dass** der Verlauf der Funktion $f_C(t)$ durch eine Exponentialfunktion bestimmt ist.

11. Kraftmessvorrichtung (1) nach Anspruch 8, 9 oder 10, **dadurch gekennzeichnet, dass** das digitale Filter (133) ein in einer Filterstufe (130) angeordnetes rekursives oder nicht-rekursives Filter n-ter Ordnung, vorzugsweise ein IIR-Filter oder ein FIR-Filter ist, dem das Detektormodul (131) und das Generatormodul (132) individuell zugeordnet sind.

12. Kraftmessvorrichtung (1) nach Anspruch 11, **dadurch gekennzeichnet, dass** mehrere diskrete Filterstufen ($130_1$, ..., $130_n$) mit je einem Filter (133) tiefer Ordnung, vorzugsweise erster Ordnung, und vorzugsweise logarithmisch verteilten Bandbereiten seriell hinter einander geschaltet, und derart miteinander verbunden sind, dass das Messsignal ($ms_D$) sequentiell in allen Filterstufen ($130_1$, ..., $130_n$) bearbeitbar und die Detektion eines Lastwechsels in einer der Filterstufen ($130_1$) zumindest den nachgeschalteten Filterstufen ($130_2$, ..., $130_n$) mitteilbar ist.

13. Kraftmessvorrichtung (1) nach Anspruch 11 oder 12, **dadurch gekennzeichnet, dass** das Messsignal ($ms_D$) oder dessen Ableitung im Detektormodul (131) vorzugsweise über ein Begrenzermodul (LIM) einem ersten und über ein Invertermodul (INV) einem zweiten Integratormodul (INT1; INT2) zuführbar ist, wonach die am Ausgang der Integratormodule (INT1; INT2) resultierenden Signale in einem Komparatormodul (CMP) mit einem Schwellwert (TH) vergleichbar ist, nach dessen Überschreiten das Generatormodul (132) und vorzugsweise auch das Detektormodul (131) zurücksetzbar sind; oder, dass der Abstand der Nulldurchgänge der Ableitung des Messsignals ($ms_D$) in einem Komparatormodul mit einem Schwellwert vergleichbar sind, nach dessen Überschreiten das Generatormodul (132) und vorzugsweise auch das Detektormodul (131) zurücksetzbar sind.

14. Kraftmessvorrichtung (1) nach einem der Ansprüche 9 bis 13, **dadurch gekennzeichnet, dass** der Filterparameter (r) nach Detektion eines Lastwechsels auf einen Wert zurück setzbar ist, der bewirkt, dass die Transferfunktion G(z) des Filters (133) zumindest annähernd gleich 1 ist und/oder dass die Variation des zurück gesetzten Filterparameters (r) exponentiell in Abhängigkeit des beim Lastwechsel auftretenden Rauschens und der Auflösung der Kraftmessvorrichtung (1) gewählt ist.

15. Kraftmessvorrichtung (1) nach einem der Ansprüche 9 bis 14, **dadurch gekennzeichnet, dass** ein der Optimierung der Kraftmessvorrichtung (1) dienendes Programm ($P_{OPT}$) vorgesehen ist, mittels dessen die Funktion $f_C(t)$, welche die Variation des Filterparameters (r) bestimmt, und/oder der Endwert (x) des Filterparameters (r) schrittweise änderbar und die resultierenden Auswirkungen anhand wenigstens eines gespeicherten Signalverlaufs (s-z) feststellbar sind, wonach derjenige Verlauf der Funktion $f_C(t)$ und derjenige Endwert (x) des Filterparameters (r) für die zukünftige Signalverarbeitung übernehmbar ist, für die die kürzeste Einschwingzeit bei einem Lastwechsel bzw. nach dem Einschwingen der Kraftmessvorrichtung (1) das geringste Rauschen festgestellt wurden.

16. Kraftmessvorrichtung (1) nach einem der Ansprüche 9 bis 15, **dadurch gekennzeichnet, dass** die Filter (133) der mehreren diskreten Filterstufen ($130_1$, ..., $130_n$) rekursive und/oder nicht-rekursive Filter sind; und/oder die Filter (133) der mehreren diskreten Filterstufen ($130_1$, ..., $130_n$) eine Filterkaskade mit rekursiven Filtern bilden, denen wenigstens ein nicht-rekursives Filter nachgeschaltet ist; und/oder das ein zur Filterung des Messsignals ($ms_A$; $ms_D$) zusätzlich wenigstens ein nicht-variables analoges oder digitales Filter vorgesehen ist.

## Claims

1. A method for the processing of the output signal of a measurement transducer (10) provided in a force measuring device (1), in particular a weighing device, by means of which a measured signal (ms) corresponding to an acting load is formed, which is filtered in a variable analogue filter (113) and/or, after processing in an analogue/digital converter (12), in a variable digital filter (133), in order to remove interfering signal components caused by interfering effects, in particular by load fluctuations, wherein
the measured signal (ms) is monitored with regard to the occurrence of a load fluctuation, and after the detection of a load fluctuation, at least one filter parameter (r) of the filter (113, 133) is reset and modified as a function of time in accordance with a profile provided $f_C(t)$, so that the filter (113, 133) after the detection of the load fluctuation is opened, and then closed up to a prescribed filter characteristic, which is defined by an end value (x) of the at least one filter parameter (r).

2. The method in accordance with Claim 1,
**characterised in that** the profile of the function $f_C(t)$ is defined in terms of an exponential function.

3. The method in accordance with Claim 1 or 2,
**characterised in that** the digital filter (133) is a recursive or non-recursive n-th order filter, preferably an IIR filter or an FIR filter, arranged in a filter stage (130), to which a detector module (131) serving to detect load fluctuations and a generator module (132) are individually assigned, which serves to generate values for the filter parameter (r), which correspond to the profile of the function $f_C(t)$.

4. The method in accordance with Claim 3,
**characterised in that** a plurality of discrete filter stages ($130_1$, ..., $130_n$), each with a low order filter (133), preferably a first-order filter and preferably with a logarithmically distributed bandwidth, are connected in series one behind another, and are connected with one another such that the measured signal ($ms_D$) is sequentially processed in all the filter stages ($130_1$, ..., $130_n$), and the detection of a load fluctuation in one of the filter stages ($130_1$) is signalled to the other filter stages ($130_2$, ..., $130_n$).

5. The method in accordance with Claim 3 or 4,
**characterised in that** after detection of a load fluctuation, the inputs and outputs of the filter stages ($130_1$, ..., $130_n$) serving the supply and extraction of the measured signal ($ms_D$) are connected with one another for at least one sampling period ($T_A$), so that the measured signal ($ms_D$) can pass through the filter stages ($130_1$, ..., $130_n$) unprocessed.

6. The method in accordance with Claim 3, 4 or 5,
**characterised in that** the measured signal ($ms_D$) or its derivative in the detector module (131) is supplied, preferably via a limiter module (LIM) to a first, and via an inverter module (INV), to a second integrator module (INT1; INT2), after which the resulting signals at the outputs of the integrator modules (INT1; INT2) are compared with a threshold value (TH) in a comparator module (CMP), after the exceedance of which the generator module (132) and preferably also the detector module (131) are reset, or, **in that** the distance between the zero crossing points of the derivative of the measured signal ($ms_D$) are compared with a threshold value in a comparator module, after the exceedance of which the generator module (132) and preferably also the detector module (131) are reset.

7. The method in accordance with one of the Claims 3 to 6,
**characterised in that** after detection of a load fluctuation the filter parameter (r) is reset to a value, that causes the transfer function G(z) of the filter (133) to be at least approximately equal to 1, and/or that the variation of the reset filter parameter (r) is selected as an exponential function of the noise level occurring during the load fluctuation, and of the resolution of the force measuring device (1).

8. The method in accordance with one of the Claims 3 to 7,
**characterised in that** for purposes of optimising the force measuring device (1), the function $f_C(t)$, which defines the variation of the filter parameter (r), and/or the end value (x) of the filter parameter (r) alters in a stepwise manner, and the resulting effects are defined on the basis of at least one stored signal profile (s-z), whereupon the profile of the function $f_c(t)$, and the end value (x) of the filter parameter (r) that are adopted for future signal processing, are those for which the shortest rise time for a load fluctuation, and/or, after the transient oscillation of the force measuring device (1), the lowest noise level, have been established.

9. A force measuring device (1), in particular a weighing machine (1), suitable for the execution of the method in accordance with one of the Claims 1 to 8,
with at least one processor (1300, 16), at least one storage unit (1301) and a measurement transducer (10), by means of which a measured signal (ms) corresponding to an acting load is formed, which is filtered in a variable analogue filter (113) and/or, after processing in an analogue/digital converter (12), in a variable digital filter (133) in order to remove interfering signal components caused by interfering effects, in particular by load fluctuations, wherein as least one detector module (111, 131) suitable for the monitoring of the measured signal (ms; $ms_A$; $ms_D$) and for the detection of load fluctuations is provided, which controls a generator module (112, 132), which is suitable for the resetting of at least one filter parameter (r) of the filter (113, 133), and for the modification of the filter parameter (r) as a function of time in accordance with a prescribed profile $f_c(t)$, so that the filter (113, 133) after the detection of a load fluctuation can be opened and then closed up to a prescribed filter characteristic, which is defined by means of a final value (x) of the at least one filter parameter (r).

10. The force measuring device (1) in accordance with Claim 9,
**characterised in that** the profile of the function $f_c(t)$ is defined in terms of an exponential function.

11. The force measuring device (1) in accordance with Claim 8, 9 or 10,
**characterised in that** the digital filter (133) is a recursive or non-recursive n-th order filter, preferably an IIR filter or an FIR filter, arranged in a filter stage (130), to which a detector module (131) and the generator module (132) are individually assigned.

12. The force measuring device (1) in accordance with Claim 11,
**characterised in that** a plurality of discrete filter stages ($130_1$, ..., $130_n$), each with a low order filter (133), preferably a first-order filter and preferably with a logarithmically distributed bandwidth, are connected in series one behind another, and are connected with one another such that the measured signal ($ms_D$) can be sequentially processed in all the filter stages (130, ..., $130_n$), and the detection of a load fluctuation in one of the filter stages ($130_1$) can be signalled to the downstream filter stages ($130_2$, ..., $130_n$).

13. The force measuring device (1) in accordance with Claim 11 or 12,
**characterised in that** the measured signal ($ms_D$) or its derivative in the detector module (131) is supplied, preferably via a limiter module (LIM) to a first, and via an inverter module (INV), to a second integrator module (INT1; INT2), whereupon the resulting signals at the outputs of the integrator modules (INT1; INT2) can be compared with a threshold value (TH) in a comparator module (CMP), after the exceedance of which the generator module (132) and preferably also the detector module (131) can be reset, or, that the distance between the zero crossing points of the derivative of the measured signal ($ms_D$) can be compared with a threshold value in a comparator module, after the exceedance of which the generator module (132) and preferably also the detector module (131) can be reset.

14. The force measuring device (1) in accordance with one of the Claims 9 to 13,
**characterised in that** after detection of a load fluctuation of the filter parameter (r) can be reset to a value that causes the transfer function G(z) of the filter (133) to be at least approximately equal to 1, and/or that the variation of the reset filter parameter (r) is selected as an exponential function of the noise level occurring during the load fluctuation, and of the resolution of the force measuring device (1).

**15.** The force measuring device (1) in accordance with one of the Claims 9 to 14, **characterised in that** a program ($P_{OPT}$) serving to optimise the force measuring device (1) is provided, by means of which the function $f_c(t)$, which determines the variation of the filter parameter (r), and/or the final value (x) of the filter parameter (r) can be altered in a stepwise manner and the resulting effects can be defined with the aid of at least one stored signal profile (s-z), whereupon the profile of the function $f_c(t)$, and the final value (x) of the filter parameter (r) that can be adopted for future signal processing, are those for which the shortest rise time for a load fluctuation and/or, after the transient oscillation of the force measuring device (1), the lowest noise level, have been established.

**16.** The force measuring device (1) in accordance with one of the Claims 1 to 15, **characterised in that** the filters (133) of the plurality of discrete filter stages ($130_1$, ..., $130_n$) are recursive and/or non-recursive filters, and/or the filters (133) of the plurality of discrete filter stages ($130_1$, ..., $130_n$) form a filter cascade with recursive filters downstream of which at least one non--recursive filter is positioned, and/or that in addition, at least one non-variable analogue or digital filter is provided for purposes of filtering the measured signal ($ms_A$; $ms_D$) .

## Revendications

**1.** Procédé pour traiter le signal de sortie d'un convertisseur de mesure (10), prévu dans un dispositif de mesure de force (1), en particulier une balance, qui génère un signal de mesure (ms) correspondant à une charge agissante, lequel signal de mesure (ms) est filtré par un filtre (113) analogique variable, et/ou, après traitement dans un convertisseur analogique/numérique (12), est filtré par un filtre (133) numérique variable afin d'éliminer des composantes perturbatrices du signal, provoquées par des effets perturbateurs, en particulier par des changements de charge, le signal de mesure (ms) étant surveillé en ce qui concerne l'apparition d'un changement de charge, et, après détection d'un changement de charge, au moins un paramètre de filtre (r) du filtre (113 ; 133) étant réinitialisé et étant modifié en fonction du temps selon un tracé $f_c(t)$ prévu, de sorte que le filtre (113 ; 133) est ouvert après la détection du changement de charge et est à nouveau fermé jusqu'à une caractéristique de filtre prédéfinie, laquelle est déterminée par une valeur finale (x) du au moins un paramètre de filtre (r).

**2.** Procédé selon la revendication 1, **caractérisé en ce que** le tracé de la fonction $f_c(t)$ est déterminé par une fonction exponentielle.

**3.** Procédé selon la revendication 1 ou 2, **caractérisé en ce que** le filtre (133) numérique est un filtre récursif ou non-récursif, disposé dans un étage de filtre (130) d'ordre n-ième, de préférence un filtre IIR ou un filtre FIR, auquel sont associés individuellement un module détecteur (131) servant à la détection de changements de charge et un module générateur (132), lequel sert à générer des valeurs pour le paramètre de filtre (r), qui correspondent au tracé de la fonction $f_c(t)$.

**4.** Procédé selon la revendication 3, **caractérisé en ce que** plusieurs étages de filtre discrets ($130_1$, ..., $130_n$) comprenant chacun un filtre (133) d'ordre passe-bas, de préférence de premier ordre, et de préférence des largeurs de bande réparties de préférence de façon logarithmique sont montés en série les uns derrière les autres, et sont reliés les uns aux autres de telle sorte que le signal de mesure ($ms_D$) est traité de façon séquentielle dans tous les étages de filtre ($130_1$, ..., $130_n$) et la détection d'un changement de charge dans l'un des étages de filtre ($130_1$) est signalé aux autres étages de filtre ($130_2$, ..., $130_n$) .

**5.** Procédé selon la revendication 3 ou 4, **caractérisé en ce que**, après la détection d'un changement de charge, les entrées et sorties des étages de filtre ($130_1$, ..., $130_n$), servant à l'arrivée et au prélèvement du signal de mesure ($ms_D$), sont reliées les unes aux autres au moins pour une période d'échantillonage ($T_A$), de sorte que le signal de mesure ($ms_D$) peut passer dans les étages de filtre ($130_1$, ..., $130_n$) sans être traité.

**6.** Procédé selon la revendication 3, 4 ou 5, **caractérisé en ce que** le signal de mesure ($ms_D$) ou sa dérivée est acheminé dans le module détecteur (131) de préférence par un module limiteur (LIM) à un premier module intégrateur et par un module inverseur (INV) à un second module intégrateur (INT1 ; INT2), après quoi les signaux résultant à la sortie des modules intégrateurs (INT1 ; INT2) sont comparés dans un module comparateur (CMP) avec une valeur seuil (TH), après le dépassement de laquelle le module générateur (132) et de préférence également le module détecteur (131) sont réinitialisés, ou **en ce que** l'espacement des passages par zéro de la dérivée du signal de mesure ($ms_D$) est comparé dans un module comparateur avec une valeur seuil, après le dépassement de laquelle le module générateur (132) et de préférence également le module détecteur (131) sont réinitialisés.

**7.** Procédé selon l'une des revendications 3 à 6, **caractérisé en ce que** le paramètre de filtre (r) est réinitialisé, après la détection d'un changement de charge, à une valeur qui fait que la fonction de transfert G(z) du filtre (133) est au moins approximativement égale à 1 et/ou **en ce que** la variation du paramètre de filtre (r) réinitialisé est choisi de façon exponentielle en fonction du bruit apparaissant lors du changement de charge et de la résolution du dispositif de mesure de force (1).

**8.** Procédé selon l'une des revendications 3 à 7, **caractérisé en ce que**, pour optimiser le dispositif de mesure de force (1), la fonction $f_c(t)$, qui détermine la variation du paramètre de filtre (r), et/ou la valeur finale (x) du paramètre de filtre (r) est modifiée pas à pas et les conséquences en résultant sont constatées à l'aide d'au moins un tracé de signal mémorisé (s-z), après quoi le tracé de la fonction $f_c(t)$ et la valeur finale (x) du paramètre de filtre (r) sont pris en charge pour le futur traitement du signal, pour lequel le plus court temps de réponse lors d'un changement de charge et/ou, après le temps de réponse du dispositif de mesure de force (1), le plus faible bruit ont été constatés.

**9.** Dispositif de mesure de force (1), en particulier balance (1), approprié pour la mise en oeuvre du procédé selon l'une des revendications 1 à 8, comprenant au moins un processeur (1300 ; 16), au moins une unité de stockage (1301) et un convertisseur de mesure (10), par lequel est formé un signal de mesure (ms) correspondant à une charge agissante, lequel signal peut être filtré dans un filtre (113) analogique variable et/ou, après le traitement dans un convertisseur analogique/numérique (12), dans un filtre (133) numérique variable, afin d'éliminer des composantes de signal perturbatrices, provoquées par des effets perturbateurs, en particulier par des changements de charge, au moins un module détecteur (111 ; 131) étant prévu, lequel module détecteur (111 ;131) étant approprié pour le contrôle du signal de mesure (ms ; $ms_A$; $ms_D$) et pour la détection de changements de charge, lequel module commande un module générateur (112 ; 132), lequel est approprié pour la réinitialisation d'au moins un paramètre de filtre (r) du filtre (113 ; 133) et pour la variation du paramètre de filtre (r) en fonction du temps selon un tracé prévu $f_c(t)$, de sorte que le filtre (113 ; 133) peut être ouvert après la détection du changement de charge et à nouveau fermé jusqu'à une caractéristique de filtre prédéfinie, qui est définie par une valeur finale (x) du au moins un paramètre de filtre (r).

**10.** Dispositif de mesure de force (1) selon la revendication 9, **caractérisé en ce que** le tracé de la fonction $f_c(t)$ est déterminé par une fonction exponentielle.

**11.** Dispositif de mesure de force (1) selon la revendication 8, 9 ou 10, **caractérisé en ce que** le filtre (133) numérique est un filtre récursif ou non-récursif, disposé dans un étage de filtre (130), d'ordre n-ter, de préférence un filtre IIR ou un filtre FIR, auquel le module détecteur (131) et le module générateur (132) sont attribués individuellement.

**12.** Dispositif de mesure de force (1) discrets selon la revendication 11, **caractérisé en ce que** plusieurs étages de filtre ($130_1$, ..., $130_n$) comprenant chacun un filtre (133) d'ordre faible, de préférence de premier ordre, et des largeurs de bande réparties de préférence de façon logarithmique sont montés en série les uns derrière les autres, et sont reliés les uns aux autres de telle sorte que le signal de mesure ($ms_D$) peut être traité de façon séquentielle dans tous les étages de filtre ($130_1$, ..., $130_n$) et la détection d'un changement de charge dans l'un des étages de filtre ($130_1$) peut être communiquée au moins aux étages de filtre ($130_2$, ..., $130_n$) placés en aval.

**13.** Dispositif de mesure de force (1) selon la revendication 11 ou 12, **caractérisé en ce que** le signal de mesure ($ms_D$) ou sa dérivée dans le module détecteur (131) peut être amené de préférence par un module limiteur (LIM) à un premier module intégrateur et par un module inverseur (INV) à un second module intégrateur (INT1 ; INT2), après quoi les signaux résultant à la sortie des modules intégrateurs (INT1 ; INT2) peut être comparé dans un module comparateur (CMP) avec une valeur seuil (TH), après le dépassement de laquelle le module générateur (132) et de préférence également le module détecteur (131) peuvent être réinitialisés ; ou bien **en ce que** l'espacement des passages par zéro de la dérivée du signal de mesure ($ms_D$) peut être comparé dans un module comparateur avec une valeur seuil, après le dépassement de laquelle le module générateur (132) et de préférence également le module détecteur (131) peuvent être réinitialisés.

**14.** Dispositif de mesure de force (1) selon l'une des revendications 9 à 13, **caractérisé en ce que** le paramètre de filtre (r) peut être réinitialisé, après la détection d'un changement de charge, sur une valeur qui fait que la fonction de transfert G(z) du filtre (133) est au moins approximativement égale à 1 et/ou ce que la variation du paramètre de filtre (r) réinitialisé est choisi de façon exponentielle en fonction du bruit apparaissant lors du changement de charge et de la résolution du dispositif de mesure de force (1).

15. Dispositif de mesure de force (1) selon l'une des revendications 9 à 14, **caractérisé en ce qu'**il est prévu un programme ($P_{OPT}$), servant à l'optimisation du dispositif de mesure de force (1), à l'aide duquel la fonction $f_c(t)$, laquelle détermine la variation du paramètre de filtre (r), et/ou **en ce que** la valeur finale (x) du paramètre de filtre (r) peut varier de façon progressive et les conséquences en résultant peuvent être constatées à l'aide d'au moins un tracé de signal (s-z) mémorisé, après quoi le tracé de la fonction $f_c(t)$ et la valeur finale respective (x) du paramètre de filtre (r) peuvent être pris en charge pour le futur traitement de signal, pour lequel le temps de réponse le plus court est constaté lors d'un changement de charge ou le bruit le plus faible est constaté après le temps de réponse du dispositif de mesure de force (1).

16. Dispositif de mesure de force (1) selon l'une des revendications 9 à 15, **caractérisé en ce que** les filtres (133) des plusieurs étages de filtre discrets ($130_1$, ..., $130_n$) sont des filtres récursifs et/ou des filtres non-récursifs ; et/ou les filtres (133) des plusieurs étages de filtre ($130_1$, ..., $130_n$) discrets forment une cascade de filtres avec des filtres récursifs, en aval desquels au moins un filtre non-récursif est monté ; et/ou qu'il est prévu en supplément au moins un filtre analogique ou numérique non-variable pour le filtrage du signal de mesure ($mS_A$ ; $ms_D$) .

FIG. 2

FIG. 1

FIG. 3

FIG. 4

**FIG. 5**

EP 1 736 748 B1

FIG. 6

$ms_D$ → 13

130_1 IIR/FIR
$r_1$
$r = f_1(t)$
$r = 1 - e^{p\cdot T/t}$
$r(tx) = x_1$

130_2 IIR/FIR
$r_2$
$r = f_2(t)$
$r = 1 - e^{p\cdot T/t}$
$r(tx) = x_2$

130_n IIR/FIR
$r_n$
$r = f_n(t)$
$r = 1 - e^{p\cdot T/t}$
$r(tx) = x_n$

$RST_{OUT}$

$ms_{DK}$ →

135_1  NLW1  NLW2  t1
135_2  NLW1  NLW2  t1
135_n  NLW1  NLW2  t1

$P_{OPT}$

135

MEM  1301
DSP  1300

FIG. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- CH 673529 A5
- DE 10024986 A1
- US 5665941 A
- US 20040088342 A1
- US 6271484 B1
- US 5190115 A
- US 4705126 A

**In der Beschreibung aufgeführte Nicht-Patentliteratur**

- Bauen Sie Ihre Qualität auf solidem Grund!. *Firmenbrochure,* Januar 2001, 14-15
- Halbleiterschaltungstechnik. **U. TIETZE ; CH. SCHENK.** Nachdruck. Springer Verlag, 1999, 1181-1184